(19) Europäisches Patentamt

European Patent Office

Office européen des brevets

(11) EP 1 206 068 B1

(12) EUROPEAN PATENT SPECIFICATION

(45) Date of publication and mention of the grant of the patent:
02.11.2005 Bulletin 2005/44

(51) Int Cl.⁷: $H04L\ 12/28$, $H04L\ 12/56$

(21) Application number: 01000603.9

(22) Date of filing: 08.11.2001

(54) **Method of increasing data rate via clock switching in a wireless data communication network**

Verfahren zur Erhöhung der Datenrate durch Taktumschaltung in einem drahtlosen Datennetz

Méthode d'augmentation du débit de données via un changement d'horloge dans un réseau de données sans fil

(84) Designated Contracting States:
DE FR GB

(30) Priority: 08.11.2000 US 246665
30.07.2001 US 308715

(43) Date of publication of application:
15.05.2002 Bulletin 2002/20

(73) Proprietor: TEXAS INSTRUMENTS
INCORPORATED
Dallas, Texas 75251 (US)

(72) Inventor: HEEGARD, Chris
CA 95404, Santa Rosa (US)

(74) Representative: Holt, Michael et al
Texas Instruments Ltd.,
EPD MS/13,
800 Pavilion Drive
Northampton Business Park,
Northampton NN4 7YL (GB)

(56) References cited:
WO-A-99/00927          WO-A-99/49586
US-A- 5 748 676

• WEBSTER M ET AL: "Reuse of 802.11b Preambles with HRb OFDM" IEEE 802.11-00/390, 1 November 2000 (2000-11-01), XP002217331 Retrieved from the Internet: <URL:http://grouper.ieee.org/groups/802/11/Documents/DT351-400.html> [retrieved on 2002-10-18]
• NEE VAN R ET AL: "NEW HIGH-RATE WIRELESS LAN STANDARDS" IEEE COMMUNICATIONS MAGAZINE, IEEE SERVICE CENTER. PISCATAWAY, N.J, US, vol. 37, no. 12, December 1999 (1999-12), pages 82-88, XP000908328 ISSN: 0163-6804
• VAN NEE R: "A new OFDM standard for high rate wireless LAN in the 5 GHz band" VEHICULAR TECHNOLOGY CONFERENCE, 1999. VTC 1999 - FALL. IEEE VTS 50TH AMSTERDAM, NETHERLANDS 19-22 SEPT. 1999, PISCATAWAY, NJ, USA,IEEE, US, 19 September 1999 (1999-09-19), pages 258-262, XP010352876 ISBN: 0-7803-5435-4

EP 1 206 068 B1

## Description

### TECHNICAL FIELD OF THE INVENTION

This invention relates generally to wireless communications, and more particularly to a method of increasing the data rate in a wireless data communication network (e.g. Ethernet) via clock switching.

### DESCRIPTION OF THE PRIOR ART

The existing IEEE 802.11b standard, and the Texas Instruments Incorporated (herein after TI) proposed 22 Mbps extension to the standard, are based upon an 11 Msps symbol rate and a bandwidth occupancy of 20 MHz. In terms of modern digital communications techniques such as pulse shaping and adaptive equalization, a more aggressive symbol rate in the same bandwidth is practical. In order to deal with inter-operability with existing networks however, the structure of the preamble, including the symbol rate of the preamble, must not change.

In view of the foregoing, it would be desirable to have a method of transmitting a preamble, e.g. 11 Msps preamble, followed by a higher symbol rate encoded data rate.

### SUMMARY OF THE INVENTION

The present invention is directed to a method of increasing the data rate in a wireless data communication network such as Ethernet via clock switching. The method employs clock switching between the preamble and the encoded data portion of a packet structure. A shift block includes a tail sequence and a head sequence that is inserted between the preamble and the encoded data portion. The clock switching occurs within the shift block between the tail and the head sequences. The tail sequence and the head sequence are each constrained to be a fixed sequence.

An embodiment of the present invention is directed to a method of increasing the data rate in a wireless data communication network wherein the method comprises the steps of: constraining an end portion of a preamble associated with a data packet to be a first fixed sequence; constraining a beginning portion of encoded data associated with the data packet to be a second fixed sequence; transmitting the data packet preamble at a first clock rate; changing the first clock rate to a second clock rate between the first fixed sequence and the second fixed sequence; and transmitting the encoded data at the second clock rate.

According to another embodiment of the present invention, a method of increasing the rate of data transmission in a wireless communication network comprises the steps of: transmitting at a first clock rate, a data packet preamble associated with a data packet and having an end portion comprising a first fixed sequence; and transmitting at a second clock rate, encoded data associated with the data packet and having a beginning portion comprising a second fixed sequence.

### BRIEF DESCRIPTION OF THE DRAWINGS

Other aspects and features of the present invention will be readily appreciated as the same become better understood by reference to the following detailed description when considered in connection with the accompanying drawings in which like reference numerals designate like parts throughout the figures thereof and wherein:

Figure 1 is a diagram illustrating a raised cosine pulse;
Figure 2A is an eye diagram illustrating a 20 MHz signal with a 16.5 Msps symbol rate;
Figure 2B is an eye diagram illustrating a 20 MHz signal with an 11 MHz symbol rate;
Figures 3A and 3B are diagrams illustrating waveform effects due to clock switching from 11 Msps to 16.5 Msps using a fixed 20 MHz bandwidth;
Figures 4A and 4B are diagrams illustrating waveform effects due to clock switching from 11 Msps to 16.5 Msps using a guard band having a head length of 2 symbols and a tail length of 3 symbols;
Figures 5A and 5B are diagrams illustrating waveform effects due to clock switching from 11 Msps to 16.5 Msps using a guard band having a head length of 4 symbols and a tail length of 6 symbols;
Figure 6 is a diagram illustrating a packet structure without clock switching;
Figure 7 is a diagram illustrating a packet structure with clock switching; and
Figure 8 is a diagram illustrating an embodiment of a wireless data communication network.

While the above-identified drawing figures set forth alternative embodiments, other embodiments of the present invention are also contemplated, as noted in the discussion. In all cases, this disclosure presents illustrated embodiments of the present invention by way of representation and not limitation. Numerous other modifications and embodiments can be devised by those skilled in the art which fall within the scope of the principles of this invention.

### DETAILED DESCRIPTION OF THE PREFERRED EMBODIMENTS

The existing IEEE 802.11b standard, and the TI proposed 22 Mbps extension to the standard, are based upon an 11 Msps symbol rate and a bandwidth occupancy of 20 MHz. The ratio of bandwidth to symbol rate, 20/11=1.818, implies an excess bandwidth parameter $\alpha$=81.8%. This parameter, which expresses the amount of "waveform spreading", can be modeled with a (complex) baseband transmission signal of the form

$$x(t) = \sum_{k=0}^{n-1} c_k p\left(t - kT\right)$$

where the complex samples $\{c_k\}$ represent the encoded data and the real valued pulse shape $p(t)$ determines the spectrum of the signal. In IEEE 802.11b, the samples $\{C_k\}$ are drawn from the QPSK signal set while the 22 Mbps samples belong to the 8-PSK signal set. For a Nyquist pulse, the pulse shape satisfies the equation

$$p\left(kT\right) = \begin{cases} 1 & k = 0 \\ 0 & k \neq 0 \end{cases}$$

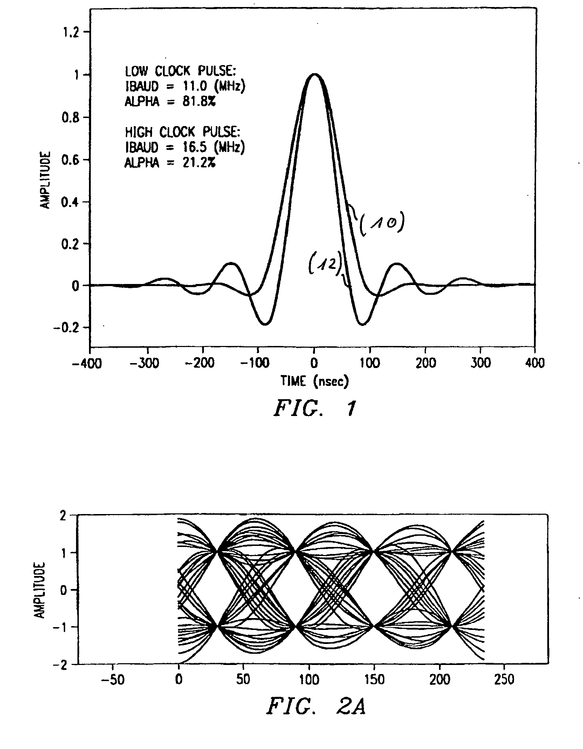

where k is an integer. One example of such a pulse shape, known as a raised cosine pulse is illustrated in Figure 1. In this example, a raised cosine pulse occupies a 20 MHz bandwidth for two cases: an $\alpha=81.8\%$ excess bandwidth with $T = 1/(11 \times 10^6$ Hz), enumerated as raised cosine pulse (10), and an $\alpha=21.2\%$ excess bandwidth with $T = 1/(16.5 \times 10^6$ Hz), enumerated as raised cosine pulse (12). This second pulse (12) increases the symbol rate by 50% when compared to the first pulse (10); yet it maintains the same 20 MHz bandwidth.

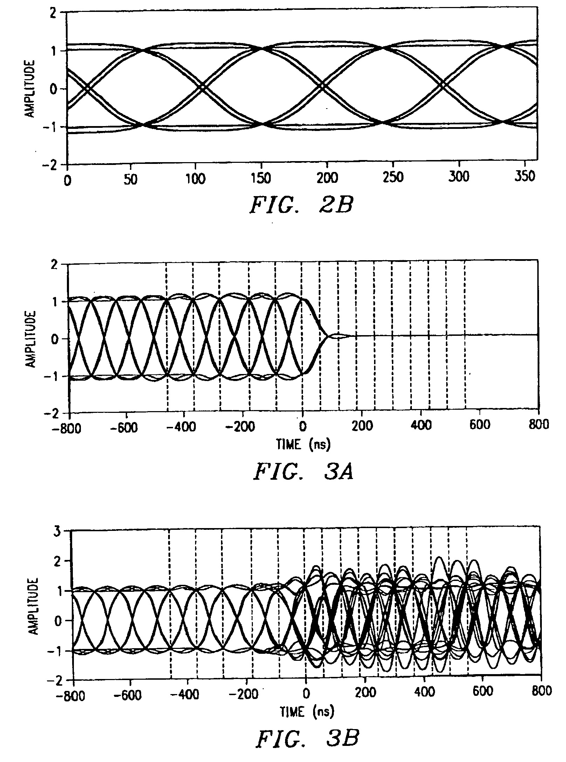

The effect of changing the symbol clocking while maintaining a fixed bandwidth can be observed in the "eye diagrams" depicted in Figures 2A and 2B. Specifically, Figure 2B is an eye diagram illustrating a 20 MHz signal with an 11 Msps symbol rate; while Figure 2A is an eye diagram illustrating a 20 MHz signal with a 16.5 MHz symbol rate. These eye diagrams demonstrate that a faster symbol rate implies a symbol period that is reduced to 2/3 the symbol period length of that associated with the slower symbol rate. Further, the smaller $\alpha=21.2\%$ waveform shown in Figure 2A depicts a more complex structure that relates to the fact that the signal pulse shape has a more intricate behavior.

A method to improve the throughput of transmission while maintaining interoperability with existing networks is achieved with a changing of the symbol clock after the packet preamble. This method of improving the data rate allows for the reuse of modulation and encoding methods of the IEEE standard and TI extension discussed herein before. Specifically, the three PBCC® modes that operate at 5.5 Mbps, 11 Mbps and 22 Mbps without clock switching, transmit at the rate of 8.25 Mbps, 16.5 Mbps and 33 Mbps when the clock is switched from the 11 Mbps used in the header to 16.5 Mbps during the data portion of the packet.

In a clock switched system, two baseband signals are generated such as:

$$x_1\left(t\right) = \sum_{k=0}^{n-1} c_k p_1\left(t - kT_1\right)$$

and

$$x_2\left(t\right) = \sum_{k=0}^{m-1} c_k p_2\left(t - kT_2\right)$$

where $x_1(t)$ represents the initial transmission (e.g., the preamble) and $x_2(t)$ represents the subsequent transmission. The transmitted baseband signal is the sum:

$$x(t) = x_1\left(t\right) + x_2\left(t - \tau\right)$$

where the second signal is delayed by $\tau = (n - 1)T_1 + T_2$ to align with the end of the first.

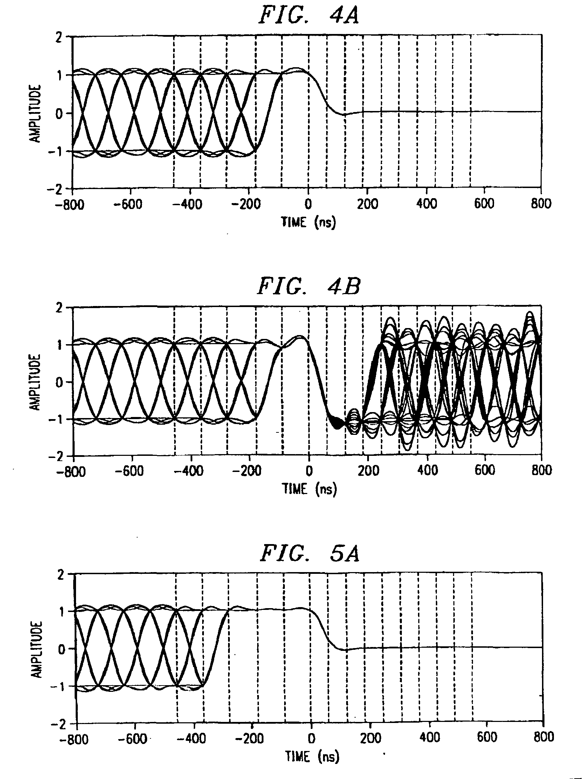

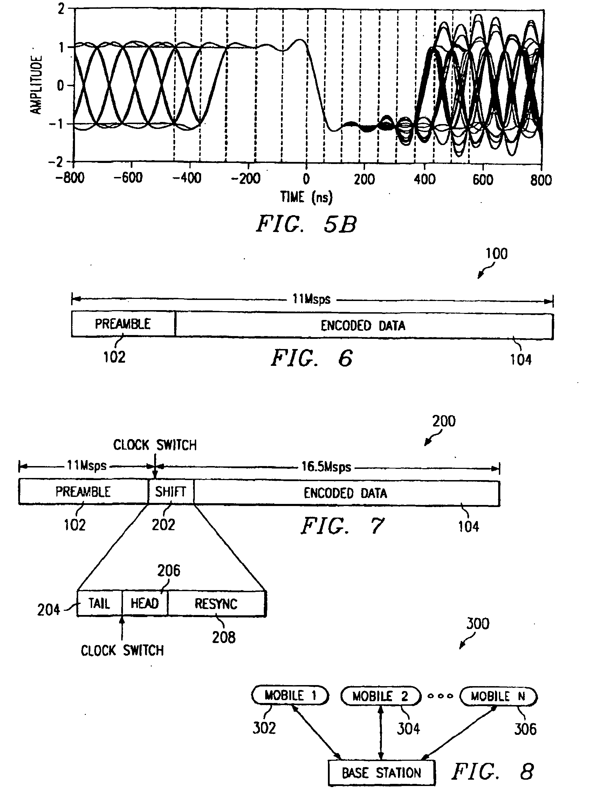

Figures 3A and 3B are diagrams illustrating waveform effects due to clock switching from 11 Msps to 16.5 Msps using a fixed 20 MHz bandwidth. Specifically, Figure 3B shows the composite $x(t)$ signal while Figure 3A shows the two component signals $x_1(t)$ and $x_2(t - \tau)$. Each signal consists of random data. The intersymbol interference that occurs due to the change in the clock rate can be easily seen in Figure 3B. This distortion effects both the end of the first signal as well as the beginning of the second signal. In order to avoid errors at the receiver (enumerated as 302, 304, 306 in Figure 8), one embodiment of the present inventive method constrains the end of the first signal (the "Tail") to be a fixed sequence and further constrains the beginning of the second signal (the "Head") to be a fixed sequence. This technique is demonstrated in Figures 4A and 4B that are diagrams illustrating waveform effects due to clock switching from 11 Msps to 16.5 Msps using a guard band having a head length of 2 symbols and a tail length of 3 symbols. Figures 5A and 5B are more diagrams illustrating waveform effects due to clock switching from 11 Msps to 16.5 Msps, but instead, using a guard band having a head length of 4 symbols and a tail length of 6 symbols. In these two cases, the head is chosen to be a constant (+1) sequence and the tail is chosen to be a constant 180° rotation of the head (-1). This selection has the desirable property that a single well defined transition occurs at the clock change boundary.

Figure 6 is a diagram illustrating a packet structure 100 without clock switching. The packet structure 100 can be seen to have a preamble 102 and an encoded data portion 104. The preamble 102 uses a common format that is detectable by all users on the associated network (enumerated as 300 in Figure 8), while the encoded data portion need only be decodable by the intended receiver (302, 304, 306).

Figure 7 is a diagram illustrating a clock switch packet structure 200 with clock switching according to one embodiment of the present invention. The clock switch packet structure 200 is obtained via insertion of a "shift" block 202 between the preamble 102 and the encoded data 104. The clock rate switch occurs within the shift block 202 between the tail sequence 204 and the head sequence 206. Preferably, a ReSync sequence 208 is employed to aid the receiver (302, 304, 306) in re-calibrating tracking loops and other dynamic receiver elements such as adaptive filters and the like.

The present method then, represents a significant advancement in the art of wireless data communications such as Ethernet. This invention has been described in considerable detail in order to provide those skilled in the equalizer art with the information needed to apply the novel principles and to construct and use such specialized components as are required. In view of the foregoing descriptions, it should be apparent that the present invention represents a significant departure from the prior art in construction and operation. However, while particular embodiments of the present invention have been described herein in detail, it is to be understood that various alterations, modifications and substitutions can be made therein without departing in any way from the scope of the present invention. For example, although various embodiments have been presented herein with reference to particular communication protocols, the present inventive methods are not limited to a particular communication protocol as used herein.

**Claims**

1. A method of increasing the rate of data transmission in a wireless communication network comprising:

   transmitting at a first clock rate, a data packet preamble (102) associated with a data packet (200) and having an end portion (204) comprising a first fixed sequence; and
   transmitting at a second clock rate, encoded data associated with the data packet (200) and having a beginning portion (206) comprising a second fixed sequence.

2. The method according to claim 1 further comprising:

   changing the first clock rate to the second clock rate between the end portion (204) and the beginning portion (206).

3. The method according to claim 2, wherein changing the first clock rate to the second clock rate comprises changing the first clock rate to a faster clock rate.

4. The method according to claim 2 or claim 3, wherein changing the first clock rate to the second clock rate comprises changing the first clock rate of 11 MHz to the second clock rate of 16.5 MHz.

5. The method according to any preceding claim further comprising:

   constraining an end portion (204) of the preamble (102) associated with the data packet (200) to be the first fixed sequence;
   constraining the beginning portion (206) of encoded data (104) associated with the data packet (200) to be the second fixed sequence;
   changing the first clock rate to a second clock rate between the first fixed sequence and the second fixed sequence; and
   transmitting the encoded data (104) at the second clock rate.

6. The method according to any of claims 1 to 5, wherein transmitting at a first clock rate, a data packet preamble (102) associated with a data packet (200) and having an end portion (204) comprising a first fixed sequence, comprises transmitting an end portion (204) constrained to be a constant plus one sequence.

7. The method according to claim 6, wherein transmitting at the second clock rate, encoded data (104) associated with the data packet (200) and having a beginning portion (206) comprising a second fixed sequence, comprises transmitting a beginning portion (206) constrained to be a constant 180° rotation of the constant plus one sequence.

8. The method according to any of claims 1 to 7, wherein transmitting at the second clock rate, encoded data (104) associated with the data packet (200) and having a beginning portion (206) comprising a second fixed sequence, comprises transmitting a beginning portion (206) constrained to be a constant 180° rotation of the first fixed sequence.

9. The method according to any of claims 1 to 8 further comprising:

   transmitting a resynchronization sequence (208) immediately following transmission of the beginning portion (206) of the encoded data (104) and before transmission of the remaining portion of the encoded data (104).

**Patentansprüche**

1. Verfahren zum Erhöhen der Datenübertragungsrate in einem drahtlosen Kommunikationsnetz, das umfasst:

Übertragen einer Datenpaket-Präambel (102), die einem Datenpaket (200) zugeordnet ist und einen Endabschnitt (204) besitzt, der eine erste feste Sequenz enthält, mit einer ersten Taktrate; und

Übertragen von codierten Daten, die dem Datenpaket (200) zugeordnet sind und einen Anfangsabschnitt (206) besitzen, der eine zweite feste Sequenz enthält, mit einer zweiten Taktrate.

2. Verfahren nach Anspruch 1, das ferner umfasst:

Ändern der ersten Taktrate auf die zweite Taktrate zwischen dem Endabschnitt (204) und dem Anfangsabschnitt (206).

3. Verfahren nach Anspruch 2, bei dem das Ändern der ersten Taktrate auf die zweite Taktrate das Ändern der ersten Taktrate auf eine schnellere Taktrate umfasst.

4. Verfahren nach Anspruch 2 oder Anspruch 3, bei dem das Ändern der ersten Taktrate auf die zweite Taktrate das Ändern der ersten Taktrate von 11 MHz auf die zweite Taktrate von 16,5 MHz umfasst.

5. Verfahren nach einem vorhergehenden Anspruch, das ferner umfasst:

Einschränken eines Endabschnitts (204) der dem Datenpaket (200) zugeordneten Präambel (102) auf die erste feste Sequenz;

Einschränken des Anfangsabschnitts (206) von dem Datenpaket (200) zugeordneten codierten Daten (104) auf die zweite feste Sequenz;

Ändern der ersten Taktrate auf die zweite Taktrate zwischen der ersten festen Sequenz und der zweiten festen Sequenz; und

Übertragen der codierten Daten (104) mit der zweiten Taktrate.

6. Verfahren nach einem der Ansprüche 1 bis 5, bei dem das Übertragen mit einer ersten Taktrate einer einem Datenpaket (200) zugeordneten Datenpaket-Präambel, die einen Endabschnitt (204) mit einer ersten festen Sequenz besitzt, das Übertragen eines Endabschnitts (204), der auf eine konstante Plus-Eins-Sequenz eingeschränkt ist, umfasst.

7. Verfahren nach Anspruch 6, bei dem das Übertragen mit der zweiten Taktrate von dem Datenpaket (200) zugeordneten codierten Daten (104), die einen Anfangsabschnitt (206) mit einer zweiten festen Sequenz besitzen, das Übertragen eines Anfangsabschnitts (206), der auf eine konstante 180°-Drehung der konstanten Plus-Eins-Sequenz eingeschränkt ist, umfasst.

8. Verfahren nach einem der Ansprüche 1 bis 7, bei dem das Übertragen mit der zweiten Taktrate von dem Datenpaket (200) zugeordneten codierten Daten (104), die einen Anfangsabschnitt (206) mit einer zweiten festen Sequenz besitzen, das Übertragen eines Anfangsabschnitts (206), der auf eine konstante 180°-Drehung der ersten festen Sequenz eingeschränkt ist, umfasst.

9. Verfahren nach einem der Ansprüche 1 bis 8, das ferner umfasst:

Übertragen einer Neusynchronisationssequenz (208) direkt nach der Übertragung des Anfangsabschnitts (206) der codierten Daten (104) und vor der Übertragung des verbleibenden Abschnitts der codierten Daten (104).

**Revendications**

1. Procédé pour accroître la cadence de transmission de données dans un réseau de communication sans fil, consistant à :

émettre, à une première cadence d'horloge, un synchroniseur initial (102) de paquet de données, qui est associé à un paquet de données (200), et possédant une partie de fin (204) comprenant une première séquence fixée; et émettre, à une seconde cadence d'horloge, des données codées associées au paquet de données (200) et possédant une partie de début (206) comprenant une seconde séquence fixée.

2. Procédé selon la revendication 1, comprenant en outre :

le passage de la première cadence d'horloge à la seconde cadence d'horloge entre la partie d'extrémité (204) et la partie de début (206).

3. Procédé selon la revendication 2, selon lequel le passage de la première cadence d'horloge à la seconde cadence d'horloge comprend le passage de la première cadence d'horloge à une cadence d'horloge plus rapide.

4. Procédé selon la revendication 2 ou la revendication 3, selon lequel le passage de la première cadence d'horloge à la seconde cadence d'horloge comprend le passage de la première cadence d'horloge de 11 MHz à la seconde cadence d'horloge de 16,5 MHz.

5.  Procédé selon l'une quelconque des revendications précédentes, consistant en outre à :

    contraindre une partie de fin (204) du synchroniseur initial (102) associé au paquet de données (200) à être la première séquence fixée;
    contraindre la partie de début (206) des données codées (104) associées au paquet de données (200) pour qu'elle soit la seconde séquence fixée;
    passer de la première cadence d'horloge à une seconde cadence d'horloge entre la première séquence fixée et la seconde séquence fixée; et
    transmettre les données codées (104) à la seconde cadence d'horloge.

6.  Procédé selon l'une quelconque des revendications 1 à 5, selon lequel l'émission, à une première cadence d'horloge, d'un synchroniseur initial (102) de paquet de données, associé à un paquet de données (200) et possédant une partie de fin (204) comprenant une première séquence fixée, comprend l'émission d'une partie de fin (204) contrainte à être une séquence constante plus un.

7.  Procédé selon la revendication 6, selon lequel l'émission, à la seconde séquence d'horloge, de données codées (104) associées au paquet de données (200) et possédant une partie de début (206), comprenant une seconde séquence fixée, comprend l'émission d'une partie de début (206) contrainte de manière à être une rotation constante de 180° de la séquence constante plus une.

8.  Procédé selon l'une quelconque des revendications 1 à 7, selon lequel l'émission, à la seconde cadence d'horloge, de données codées (104) associées au paquet de données (200) et possédant une partie de début (206) comprenant une seconde séquence fixée, comprend l'émission d'une partie de début (206) contrainte à être une rotation constante de 180° de la première séquence fixée.

9.  Procédé selon l'une quelconque des revendications 1 à 8, comprenant en outre :

    l'émission d'une séquence de resynchronisation (208) directement à la suite de l'émission de la partie de départ (206) des données codées (104) et avant l'émission de la partie restante des données codées (104).

FIG. 1

FIG. 2A

FIG. 2B

FIG. 3A

FIG. 3B

FIG. 4A

FIG. 4B

FIG. 5A

FIG. 5B

FIG. 6

FIG. 7

FIG. 8